(19) Europäisches Patentamt
European Patent Office
Office européen des brevets

(11) EP 2 492 309 A1

# (12) EUROPEAN PATENT APPLICATION

(43) Date of publication:
**29.08.2012 Bulletin 2012/35**

(51) Int Cl.:
***C08L 23/10*** *(2006.01)*

(21) Application number: **11001636.7**

(22) Date of filing: **28.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Kock, Cornelia**
  **4055 Pucking (AT)**
- **Grein, Christelle**
  **4020 Linz (AT)**
- **Potter, Elisabeth**
  **4020 Linz (AT)**

(74) Representative: **Kador & Partner**
**Corneliusstrasse 15**
**80469 München (DE)**

Remarks:
Amended claims in accordance with Rule 137(2) EPC.

## (54) Heterophasic polyolefin composition having improved flowability and impact strength

(57) The invention relates to a heterophasic polyolefin composition having improved flowability and impact strength but also an excellent impact/stiffness balance and a low amount of a hexane extractable fraction, to a process for the preparation of such a heterophasic polyolefin composition, to articles made therefrom and uses of the heterophasic polyolefin composition. The heterophasic polyolefin composition, comprises a matrix comprising a heterophasic propylene base polymer, comprising a matrix comprising a propylene homo- and/or copolymer, an elastomeric ethylene/ alpha-olefin phase dispersed in the matrix, and an ethylene polymer component having an MFR (2.16 kg/ 190 °C) of 15 to 300 g/10 min. and a density of 0.915 g/cm$^3$ or more, wherein the heterophasic polyolefin composition comprising monomer units derived from an oligomeric diene compound, and having a hexane extractable fraction in an amount of not more than 6 wt.%, measured from extruded cast films of 100μm thickness at 50 °C and 2 h extraction time and an MFR (2.16 kg, 230 °C, ISO 1133) of 8 to 80 g/10min. The heterophasic propylene polymer composition may be used for extrusion, injection moulding, blow moulding, injection stretch blow moulding, cast film extrusion or thermoforming.

EP 2 492 309 A1

## Description

The present invention relates to a heterophasic polyolefin composition having improved flowability and impact strength but also an excellent impact/stiffness balance and a low amount of a hexane extractable fraction. The present invention further relates to a process for the preparation of such a heterophasic polyolefin composition, articles made therefrom and uses of the heterophasic polyolefin composition.

There is an increasing trend in the food packaging industry to use plastic containers for food. Typical food containers such as pouches have a multilayer structure with at least one layer comprising polyolefins such as polyethylene or polypropylene, adhesives, barrier and external layers. It is desired that the polyolefin material imparts stiffness as well as high impact strength to the final packaging material. In addition, the polymers should comply with legal requirements about safety standards, e.g. FDA regulations in terms of the amount of hexane soluble.

The same trend, i.e. increased use of polyolefinic materials, is seen in the medical packaging industry as well. Again, the polymer should impart sufficient stiffness as well as high impact strength to the final packaging material.

It is known that impact strength of polypropylene can be improved by dispersing a rubber phase within the polymer matrix, thereby obtaining a heterophasic polypropylene composition. Such a material is also called "impact-modified polypropylene".

WO 2009/129873 A1 discloses a high purity heterophasic polypropylene copolymer showing high purity, reduced volatiles content, reduced fogging and reduced hexane-solubles, wherein the heterophasic polypropylene copolymer is obtainable by a multistep polymerization process in the presence of a specific Ziegler-Natta polymerisation catalyst.

EP 2 072 546 A1 discloses a heterophasic polypropylene composition with high impact strength, useful to form articles by e.g. injection molding, extrusion blow molding, injection stretch blow molding or cast film extrusion.

EP 2 154 195 A1 relates to a heterophasic polymer composition having high seal strength after being subjected to a sterilization treatment, while simultaneously maintaining impact strength on a high level. This is achieved using a reactive modification step.

Heterophasic polypropylene compositions for moulding applications should exhibit good flowability, a good impact/stiffness balance and a low level of hexane extractables. It is known that increasing the flowability (e.g. via post-reactor peroxide treatment which is usually called visbreaking) results in an increase of hexane extractables and a decrease of the stiffness due to the oxidative degradation of the polypropylene matrix. Especially in the case of heterophasic polypropylenes having a propylene-rich elastomeric phase, peroxide treatment also affects the impact strength in a negative way by degradation of the polymer chains in the elastomeric phase.

For certain applications such as e.g. packaging or coating films, heterophasic polypropylene compositions are required to also have excellent transparency. Thus, there is increasing need for a heterophasic polymer composition showing high flowability, good transparency and an excellent low temperature impact. This property combination is difficult to achieve since good transparency requires small particles in order to avoid light-scattering. However, small particles are detrimental for low-temperature impact strength, since the dominant deformation mechanism at low temperatures is crazing. A solution to overcome this problem is to match the density or refractive index of the matrix and the dispersed phase in heterophasic polymer compositions by adding an appropriate amount of polyethylene to the heterophasic polypropylene. This approach leads to good product performance, if the elastomeric phase of the heterophasic polymer has a sufficiently low molecular weight (low intrinsic viscosity, IV). Nevertheless, the impact performance of such a material at low temperatures will be rather low, due to the still small particles formed by a elastomeric phase having a low intrinsic viscosity (IV).

If the elastomeric phase contains bigger particles, the optical properties are reduced, especially in heterophasic polypropylenes having a relatively low molecular weight of the continuous matrix phase, since the viscosity ratio of the dispersed elastomeric phase to the matrix phase will be much greater than 1.

In the present invention, the term "big particles" or "relatively big particles" preferably encompasses particles having a weight average (or median particle size, $d_{50}$) particle size of 0.8 $\mu$m or more. Particles below this limit are addressed herein as "small particles" or "relatively small particles".

EP 1 607 440 A1 relates to modified polypropylene compositions, especially for automobile exterior applications comprising a heterophasic propylene copolymer, a further elastomeric copolymer and an inorganic filler. The modified composition has improved properties, where impact strength, stiffness, and elasticity are retained and surface stability is increased. This is achieved by treating the heterophasic propylene polymer composition with specific organic peroxides.

There is still a need for improved propylene polymer compositions being suitable for moulding applications such as injection moulding, blow moulding or thermoforming, where the compositions are required to have excellent processability, high impact strength, especially at low temperatures, excellent impact/stiffness balance, high transparency and low content of hexane extractables. Such propylene polymer compositions are desirably produced by a relatively simple and inexpensive process. There is particularly the need for propylene polymer compositions being suitable for thin wall injection moulding applications.

The present invention is based on the finding that the above object can be achieved by a heterophasic polyolefin composition, comprising a matrix comprising:

(A) a heterophasic propylene base polymer, comprising:

- a matrix comprising a propylene homo- and/or copolymer,
- an elastomeric ethylene/ alpha-olefin phase dispersed in the matrix, and

(B) an ethylene polymer component having an MFR (2.16 kg/ 190°C) of 15 to 300 g/10 min. and a density of 0.915 g/cm$^3$ or more,

the heterophasic polyolefin composition comprising monomer units derived from an oligomeric diene compound, and having a hexane extractable fraction in an amount of not more than 6 wt.%, measured from extruded cast films of 100μm thickness at 50°C and 2 h extraction time and an MFR (2.16 kg, 230°C, ISO 1133) of 8 to 80 g/10min.

The present invention further relates to a process for the production of the above heterophasic propylene polymer composition, comprising the steps of:

(i) providing an unmodified intermediate heterophasic propylene polymer composition which comprises a matrix comprising a propylene homo- and/or copolymer, and an elastomeric ethylene/ alpha-olefin phase dispersed in the matrix,
(ii) pre-mixing a peroxide masterbatch composition, an oligomeric diene masterbatch composition and an ethylene polymer component having an MFR (2.16 kg/ 190°C) of 15 to 300 g/10 min. and a density of 0.915 g/cm$^3$ or more with the unmodified intermediate heterophasic propylene polymer composition of step (i) to form a pre-mixed material; and
(iii) melt mixing the pre-mixed material of step (ii) in a melt mixing device at a barrel temperature in the range of 180 to 300 °C.

The term "heterophasic polyolefin composition" used herein denotes compositions consisting of an olefin polymer matrix resin and an elastomeric olefin polymer dispersed in said matrix resin.

The term "intermediate heterophasic polyolefin composition" signifies a heterophasic polyolefin composition which is obtained by a polymerization reaction and which will subsequently be subjected to a post-reactor processing step as explained in the present invention.

"Catalyst" denotes the organometallic compound containing the reaction centre of the polymerisation.

"Catalyst system" denotes the mixture of the catalyst, the optional cocatalyst and the optional support.

"Visbreaking" denotes subjecting a polymer resin to peroxide treatments in the absence of a bifunctionally unsaturated molecule such as a diene.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount so as to form a continuous phase which can act as a matrix.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt.% of the matrix, more preferably at least 90 wt.%, even more preferably at least 95 wt.% of the matrix is made of the propylene homo- and/or copolymer. The matrix may even consist of the propylene homo- and/or copolymer.

Preferably, the propylene homo- and/or copolymer constituting the matrix has a melt flow rate $MFR_2$ (230 °C, 2.16 kg) within the range of 25 to 300 g/10 min, more preferably within the range of 35 to 200 g/10 min, and even more preferably within the range of 40 to 150 g/10 min.

Preferably, the propylene homo- or copolymer constituting the matrix is made with a Ziegler-Natta catalyst.

In a preferred embodiment, the polypropylene constituting the matrix has a rather broad molecular weight distribution (MWD), more preferably the polypropylene is multimodal, even more preferred bimodal. "Multimodal" or "multimodal distribution" describes a probability distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors each have their own molecular weight distribution which may considerably differ from one another. The molecular weight distribution curve of the resulting final polymer can be seen as super-imposing of molecular weight distribution curves of the individual polymer fractions which will, accordingly,

show distinct maxima, or at least be distinctively broadened compared with the curves for individual fractions. A polymer showing such molecular weight distribution curve is called bimodal or multimodal, respectively.

The polypropylene constituting the matrix can be multimodal, e.g. bimodal. If the polypropylene constituting the matrix is multimodal (e.g. bimodal), it preferably has a molecular weight distribution (MWD) of 5 to 30, more preferably in the range of 8 to 20. However, it is also possible to use a monomodal polypropylene. If used, it preferably has an MWD of 3 to 8, more preferably 3.5 to 7.

The propylene homo- or copolymer constituting the matrix may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art.

In addition to the polypropylene matrix defined above, the heterophasic polymer composition of the present invention comprises an elastomeric ethylene/alpha-olefin phase dispersed in the matrix.

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric ethylene/ alpha-olefin is an ethylene/propylene rubber, which may additionally comprise $C_4$-$C_{12}$ alpha-olefin monomer units.

In a preferred embodiment, the elastomeric ethylene/ alpha-olefin phase has an amount of propylene-derived monomer units of 40 to 70 wt.%, preferably 45 to 65 wt.%, more preferably 52 to 63 wt.%. The amount of co- monomer units being ethylene and/or $C_4$-$C_{12}$ alpha-olefin is 30 to 60 wt.%, preferably 35 to 55 wt.%, more preferably 37 to 48 wt.%.

More preferably, the ethylene/alpha-olefin rubber phase is an ethylene/propylene rubber, wherein the amount of ethylene-derived co-monomer units is within the above ranges.

Preferably, the elastomeric ethylene/ alpha-olefin phase is present in an amount of at least 8 wt.%, more preferably at least 10 wt.%, even more preferably at least 15 wt.%, based on the weight of the heterophasic polymer composition. Preferably, said rubber phase is present in an amount within the range of 8 wt.% to 35 wt.%, more preferably 10 wt.% to 30 wt.%, even more preferably 15 wt.% to 28 wt.%, based on the weight of the heterophasic polymer composition.

In principle, the heterophasic polymer composition may additionally comprise one or more elastomeric ethylene/$C_3$-$C_{12}$ alpha-olefin phases (i.e. in total two or more ethylene/$C_3$ to $C_{12}$ alpha-olefin rubber phases) wherein at least one of these rubber phases may have less than 60 wt.% of $C_3$ to $C_{12}$ alpha-olefin derived monomer units.

However, if so, the total amount of $C_3$ to $C_{12}$ alpha-olefin derived monomer units in the dispersed rubber phases should still be high enough so as to result in a hexane extractable fraction of the heterophasic polymer composition which has an amount of not more than 6 wt.-%, preferably not more than 5.5 wt.%, even more preferably not more than 5.0 wt.%, based on the total weight of the heterophasic propylene polymer composition. The meaning of the parameter "hexane extractable fraction" will be discussed below in further detail.

The intermediate heterophasic polyolefin composition has an $MFR_2$ (230 °C, 2.16 kg) of from 6 to 80 g/10 min. Preferably, the intermediate heterophasic polyolefin composition has an $MFR_2$ (230 °C, 2.16 kg) of 10 to 70 g/10 min or even more preferably of 15 to 60 g/10 min. The total comonomer content of the heterophasic polyolefin composition, being the sum of ethylene and $C_4$-$C_{12}$ alpha-olefin present in said composition, is in the range of 5 to 25 wt.%, preferably in the range of 8 to 22 wt.%, most preferably in the range of 9 to 20 wt.%.

The intermediate heterophasic polyolefin composition can be fractionated into a xylene soluble part (XS) mostly comprising the elastomeric ethylene/ alpha-olefin phase and a xylene insoluble part (XU) mostly comprising the crystalline propylene homo- or copolymer constituting the matrix. In this context it is preferable if the intrinsic viscosity (IV) of the xylene soluble part (XS) of the polymer is larger than the intrinsic viscosity (IV) of the xylene insoluble part (XU) of the polymer.

The relative amount of the xylene soluble part (XS) in the intermediate heterophasic polyolefin composition is preferably in the range of from 10 to 30 wt.%, preferably in the range of from 12 to 28 wt.%, more preferably in the range of from 14 to 26 wt.%.

The amount of the co-monomer units, preferably ethylene units in the xylene soluble part (XS) is preferably in the range of from 30 to 60 wt.%, more preferably 35 to 55 wt.%, and amount of the co-monomer units, preferably ethylene units in the xylene insoluble part (XU) is below 5 wt.%, preferably below 3.5 wt.%.

Modifiers and additives may be added to the polypropylene composition as occasion demands. Preferably, the modifiers are selected from poly-1-butene and poly-4-methylpentene-1. Suitable additives include stabilizers, lubricants, nucleating agents, pigments and foaming agents. These modifiers and/or additives may be included during the polymerisation process or after the polymerisation by melt mixing. It is however preferred that the modifiers do not negatively affect the desirable properties of the composition as discussed above.

If the elastomeric polymer is prepared separately from the polypropylene constituting the matrix, it can be subsequently blended with the matrix polymer by any conventional blending means, e.g. melt blending in an extruder.

Alternatively, the elastomeric ethylene/alpha olefin phase can be prepared as a reactor blend together with the propylene homo- and/or copolymer constituting the matrix, e.g. starting with the production of the matrix polymer in a loop reactor and optionally a gas phase reactor, followed by transferring the product into one or more gas phase reactors, where the elastomeric polymer is polymerised.

A suitable catalyst for the polymerisation of the heterophasic propylene polymer composition is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) are suitable catalysts.

The catalyst for producing the unmodified intermediate heterophasic propylene polymer composition may be a Ziegler-Natta catalyst. If a Ziegler-Natta catalyst is used it may be e.g. an inorganic halide (e.g. $MgCl_2$) supported titanium catalyst, together with an aluminium alkyl (e.g. triethylaluminium) cocatalyst. Silanes, e.g. dicyclopentanedimethoxysilane (DCPDMS), cyclohexylmethyl-dimethoxysilane (CHMDMS) or diethylaminotriethoxysilane, may be used as external donors. Such catalyst systems are described in EP 0 491 566 A1 or in EP 0 591 224 A1. A preferred Ziegler Natta catalyst is of the type BCF20P (proprietary specification of Borealis AG) with dicyclopentanedimethoxysilane as external donor (donor D), an Al/Ti ratio (mol/mol) of 200 and an Al/donor ratio (mol/mol) of 5.

The catalyst system for preparing the heterophasic polypropylene composition of the present invention will be described in detail below.

Preferably, the heterophasic polymer composition is prepared by reactor blending in a multistep process comprising at least one loop reactor and at least one gas phase reactor. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurrygas phase process is the Spheripol® process of Basell.

Preferably, a dispersion of the elastomeric phase within the matrix polymer is produced by performing a further polymerization stage in the presence of particles of matrix polymer, e.g. as a second polymerization stage of a multistage polymerization. Preferably the combination of the matrix and elastomeric copolymer is produced in a multiple stage polymerization using two or more polymerization reactors, more preferably using bulk and gas phase reactors (especially fluidized bed gas phase reactors), especially preferably using a loop reactor followed by two gas phase reactors or by a loop and a gas phase reactor. In such a procedure, the catalyst system used may be varied between stages but is preferably the same for all stages. Especially preferably, a prepolymerized heterogeneous catalyst is used.

It has now surprisingly found that a relatively simple and inexpensive process can be used for preparing the heterophasic polypropylene composition of the present invention, by processing the above-described intermediate heterophasic polyolefin composition.

Accordingly, the present invention is further concerned with a process for the production of the heterophasic polyolefin composition according to the present invention.

The process according to the present invention involves the steps of:

(i) providing an unmodified intermediate heterophasic propylene polymer composition having an $MFR_2$ (230 °C, 2.16 kg) of from 6 to 80 g/10 min which comprises a matrix comprising a propylene homo- and/or copolymer, and an elastomeric ethylene/ alpha-olefin phase dispersed in the matrix,

(ii) pre-mixing a peroxide masterbatch composition, an oligomeric diene masterbatch composition and an ethylene polymer component having an MFR (2.16 kg/ 190 °C) of from 15 to 300 g/10 min and a density of 0.915 $g/cm^3$ or more with the intermediate heterophasic polyolefin composition of step (i) to form a pre-mixed material; and

(iii) melt mixing the pre-mixed material of step (ii) in a melt mixing device at a barrel temperature in the range of 180 to 300 °C.

In the sense of the present invention "masterbatch" means a concentrated premix of a propylene polymer with a free radical forming agent (peroxide) or an oligomeric diene, respectively. The peroxide masterbatch composition is provided in a concentration from 0.5 to 4.0 wt.%, preferably 0.8 to 3.0 wt.%, even more preferably 0.9 to 2.7 wt.%, based on the total weight of the propylene polymer composition and the diene masterbatch composition is provided in a concentration from 0.5 to 20 wt.%, preferably 0.8 to 15 wt.%, even more preferably 0.9 to 12 wt.%, based on the total weight of the propylene polymer composition.

The peroxide compound may preferably be contained in the peroxide masterbatch composition in a range of from 5 to 50 wt.%, based on the total composition of the masterbatch. The oligomeric diene may preferably be contained in the diene masterbatch composition in a range of from 20 to 65 wt.%, based on the total composition of the masterbatch.

According to the present invention it was found that using the above masterbatch compositions instead of adding a peroxide component and a diene component in pure form to the polypropylene resin powder in one or more pre-mixing steps prior to the melt-mixing step as conventionally done, much simpler process equipment can be employed. With the inventive masterbatch compositions any well-mixing extruder is useful and there is no need for specific sorption and/or dosing equipment as is required when adding the peroxide and diene component in pure form.

It is essential that the whole process does not involve visbreaking, i.e. subjecting any intermediate product to peroxide treatment in the absence of a diene such as butadiene.

Suitable dienes are conjugated or non-conjugated dienes, linear or branched dienes containing 4 to 20 carbon atoms. Preferred dienes include isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and butadiene. The most preferred diene is butadiene, e.g. 1,3-butadiene.

The unmodified intermediate heterophasic propylene polymer composition is pre-mixed with the diene masterbatch composition, the peroxide masterbatch composition and the ethylene polymer component in a powder mixing device, like a horizontal mixer with paddle stirrer. The pre-mixing preferably is carried out at a temperature of the polymer powder of 25 to 80°C, most preferably in the range of 30 to 75°C. The residence time of the polymer in the pre-mixing step is preferably 5 to 30 minutes, more preferably 8 to 20 minutes.

According to a preferred embodiment of the inventive process the peroxide masterbatch composition and the diene masterbatch composition are respectively prepared by absorbing the active ingredient (peroxide or diene) onto highly porous pelletized polypropylene, preferably having a void content in the range of 50 to 90% and a bulk density in the range of 40 to 350 $kg/m^3$ as determined in accordance to ISO 60 resp. DIN 53466. The propylene polymer into which the peroxide or the oligomeric diene compound are incorporated to form the respective masterbatch composition is preferably a foamed propylene polymer, more preferably a foamed propylene homopolymer. According to preferred embodiments an oligomeric diene masterbatch composition may comprise 40 to 60 wt.% of a foamed homopolymer and 60 to 40 wt.% of polybutadiene, such as ACCUREL® PA104 (supplier: Membrana GmbH, DE). A preferred peroxide masterbatch composition may be TRIGONOX® BPIC 37.5PP-PD (supplier: AKZO NOBEL Polymer Chemicals BV, NL) which consists of 37.5 wt.% peroxide (tert-butylperoxy isopropyl carbonate), 12.5 wt.% isododecane and 50 wt.% porous polypropylene.

The pre-mixed material is then melt-mixed at a barrel temperature of 180 to 300 °C, preferably in a continuous melt mixing device like a single screw extruder, a co-rotating twin screw extruder or a co-kneader.

The barrel temperature preferably is in the range of 170 to 280°C. More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures and fulfilling the following relation: T1 < T3 < T2. Barrel temperature T1 is preferably in the range of 170 to 200 °C. Barrel temperature T2 (in the kneading zone) preferably is in the range of 220 to 280 °C. Barrel temperature T3 (in the die zone) preferably is in the range of 190 to 220 °C.

The screw speed of the melt mixing device preferably is adjusted to a range from 150 to 800 rotations per minute (rpm).

Following the melt-mixing step, the resulting polymer melt may be pelletized either in an underwater pelletizer or after solidification of one or more strands in a water bath in a strand pelletizer.

The present invention is further concerned with a heterophasic propylene polymer composition obtainable by a multistage polymerisation process in the presence of a stereospecific polymerisation catalyst, comprising the steps of:

(i) producing an unmodified intermediate heterophasic propylene polymer composition having an $MFR_2$ (230 °C, 2.16 kg) of from 6 to 80 g/10 min which comprises a heterophasic propylene base polymer comprising a matrix comprising a propylene homo- and/or copolymer, and an elastomeric ethylene/alpha-olefin phase dispersed in the matrix;

(ii) pre-mixing a peroxide masterbatch composition, an oligomeric diene masterbatch composition and the above-defined ethylene polymer component to said unmodified intermediate heterophasic propylene polymer composition of step (i) to form a pre-mixed material; and

(iii) melt mixing the pre-mixed material of step (ii) in a melt mixing device at a barrel temperature in the range of 180 to 300 °C.

The melt mixing device preferably includes a feed zone, a kneading zone and a die zone, whereby an initial barrel temperature T1 is maintained in the feed zone, a barrel temperature T2 is maintained in the kneading zone and a die barrel temperature T3 is maintained in the die zone. Preferably, the barrel temperatures T1, T2, and T3 satisfy the following relation: T1 < T3 < T2.

Peroxides which are thermally decomposable upon the conditions of heating and melting the polymer/peroxide mixture and which meet the requirement of having a half life time t (1/2) at 110 °C of greater than 6 min and a half life

time t (1/2) at 150 °C of greater than 6 min are suitable. The following organic peroxides are suitable for the above process: dibenzoyl peroxide, tert.-butyl peroxy-2-ethylhexanoate, tert.-amyl peroxy-2- ethylhexanoate, tert.-butyl peroxydiethylacetate, 1,4-di(tert.-butylperoxycarbo)cyclohexane, tert.-butyl peroxyisobutyrate, 1,1-di(tert.-butylperoxy)-3,3,5-trimethyl-cyclohexane, methyl isobutyl ketone peroxide, 2,2-di(4,4-di(tert.-butylperoxy)cyclohexyl)propane, 1,1-di (tert.-butylperoxy) cyclohexane, tert.-butyl peroxy-3,5,5-trimethylhexanoate, tert.-amylperoxy-2-ethylhexyl carbonate, 2,2-di(tert.-butylperoxy)butane, tert.-butylperoxy isopropyl carbonate, tert.-butylperoxy 2-ethylhexyl carbonate, tert.-butyl peroxyacetate, tert.-butyl peroxybenzoate, di-tert.-amyl peroxide and mixtures of these organic peroxides.

As the oligomeric diene those species are suitable which can be polymerized with the aid of free radicals, such as 1,3-butadiene, isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and mixtures of these oligomeric dienes.

The dienes may preferably have a molecular weight Mn of not more than 10,000 g/mol, or not more than 5,000 g/mol or not more than 3,000 g/mol. These dienes may be synthesised from one or more low molecular weight dienes such as polybutadienes, especially where the different microstructures in the polymer chain, i. e. 1,4-cis, 1,4-trans and 1,2-vinyl are predominantly in the 1,2-vinyl configuration; or copolymers of butadiene and styrene having 1,2-vinyl in the polymer chain. The 1,2-vinyl content in the diene may preferably be in the range from 30 to 60%, preferably 35 to 55% or 45 to 55%.

Even more preferably the polypropylene composition according to the present invention is obtainable by pre-mixing in the presence of preferably 0.8 to 3.0 wt-%, more preferably 0.9 to 2.7 wt.-% of a masterbatch of tert-butylperoxy isopropyl carbonate (CAS No. 2372-21-6), such as TRIGONOX® BPIC 37.5PP-PD (supplier: AKZO NOBEL Polymer Chemicals BV, NL) which consists of 37.5 wt.% peroxide (tert-butylperoxy isopropyl carbonate), 12.5 wt.% isododecane and 50 wt.% porous polypropylene, and in the presence of preferably 0.8 to 15 wt.%, more preferably 0.9 to 12 wt.% of an oligomeric diene masterbatch composition typically comprising 40 to 60 wt.% of a foamed homopolymer and 60 to 40 wt.% of polybutadiene, such as ACCUREL® PA104 (supplier: Membrana GmbH, DE).

It should be understood that the addition of the diene and the peroxide may be achieved at once in the pre-mixing stage or may be split up in two additions during said pre-mixing stage.

The ethylene polymer component added to the heterophasic propylene polymer composition of the present invention may have an MFR (2.16 kg/ 190 °C) of 15 to 300 g/10 min, preferably in the range of from 20 to 300 g/10 min, even more preferably 30 to 300 g/10 min and a density of 0.915 $g/cm^3$ or more, preferably in the range of from 0.915 to 938 $g/cm^3$, even more preferably in the range of from 0.920 to 0.935 $g/cm^3$. The ethylene polymer may be premixed into step (ii) before or after adding the peroxide masterbatch composition and/or the oligomeric diene masterbatch composition.

The ethylene polymer added to the heterophasic polyolefin composition may be an ethylene homo- or copolymer, or a mixture of an ethylene homopolymer and an ethylene copolymer. The ethylene copolymer may preferably be an ethylene copolymer comprising 80 to 97 wt.-%, more preferably 85 to 95 wt.-%, units derivable from ethylene. The co-monomer units present in such an ethylene copolymer may preferably be $C_4$ to $C_{20}$ $\alpha$-olefins, e.g. 1-butene, 1-hexene and 1-octene, the latter being especially preferred. The co-monomer may preferably be added in a ratio of from 0.1 to 5 mol-%, more preferably from 0.5 to 3 mol-%.

The ethylene copolymer may preferably be prepared by using a single site polymerisation catalyst.

It has been surprisingly found that the addition of such an ethylene polymer component in the reactive processing according to the present invention may significantly improve the transparency and flowability as well as the impact properties, especially the low temperature impact strength of the final heterophasic polypropylene composition, compared to heterophasic polypropylene composition not subjected to the reactive processing according to the invention. Still further the beneficial mechanical properties, such as stiffness and tensile strength of the conventional resins can be maintained. Thus the incorporation of the ethylene polymer component during reactively processing the unmodified heterophasic polypropylenes achieves a unique and highly desirable property profile of the modified processed heterophasic polypropylene compositions of the present invention.

The heterophasic polyolefin composition according to the present invention has a hexane extractable fraction in an amount of not more than 6 wt.%, preferably not more than 5.5 wt.%, even more preferably not more than 5.0 wt. %, measured from extruded cast films of 100 $\mu$m thickness at 50 °C and 2 h. Details of the measurement method are described in the example section.

The heterophasic polyolefin composition according to the present invention preferably has a Charpy notched impact strength determined according to ISO 179/1eA at 23 °C of at least 5.0 $kJ/m^2$, preferably at least 7 $kJ/m^2$ and at -20 °C of at least 2.5 $kJ/m^2$, preferably at least 2.8 $kJ/m^2$ and at 0 °C of at least 3.0 $kJ/m^2$, preferably at least 4.0 $kJ/m^2$, even more preferably in the range of 5.0 to 50 $kJ/m^2$ and at -20 °C of at least 1.5 $kJ/m^2$, preferably at least 1.8 $kJ/m^2$, even more preferably in the range of 1.9 to 25 $kJ/m^2$.

The heterophasic polyolefin composition according to the present invention preferably has a haze value of not more than 35%, preferably not more than 32%, and a transparency of at least 80%, preferably at least 85%, both parameters being measured according to ASTM D1003 on samples of 0.5 mm thickness.

The heterophasic polyolefin composition according to the present invention preferably has a tensile modulus of at least 900 MPa, preferably at least 1000 MPa, measured according to ISO 527-2.

The heterophasic polyolefin composition according to the present invention preferably has a melting temperature $T_m$ in the range of 135 to 170 °C, more preferably from 140 to 167 °C and most preferably from 150 to 165 °C. High melting temperatures enable the provision of materials capable of withstanding steam sterilization in addition to the other mentioned and targeted properties. Higher melting temperatures can be achieved with polypropylene homopolymers and higher crystallinity.

Preferably the heterophasic polyolefin composition according to the present invention is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is preferably prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

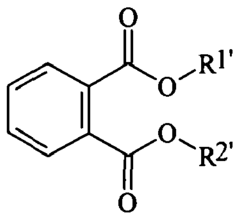
(I)

wherein R1' and R2' are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol. The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacted with $TiCl_4$ to form a titanized carrier, followed by the steps of

- adding to said titanised carrier

  (i) a dialkylphthalate of formula (I) with R1' and R2' being independently at least a $C_5$-alkyl, like at least a $C_8$-alkyl, or preferably

  (ii) a dialkylphthalate of formula (I) with R1' and R2' being the same and being at least a $C_5$-alkyl, like at least a $C_8$-alkyl,
  or more preferably

  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150°C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

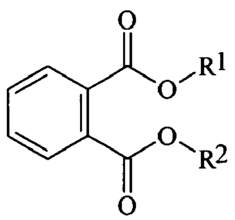

(II)

with R1 and R2 being methyl or ethyl, preferably ethyl,
the dialkylphthalate of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed. In case sufficient titanium remains on the carrier, it will act as an active element of the procatalyst. Otherwise the titanization is repeated after the above treatment in order to ensure a sufficient titanium concentration and thus activity.

Preferably the procatalyst used according to the invention contains not more than 2.5 wt.-% of titanium, preferably not more than 2.2% wt.-% and more preferably not more than 2.0 wt.-%. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from W.R. Grace, Columbia MA, USA.

For the production of the heterophasic polyolefin composition according to the invention the catalyst system used preferably comprises in addition to the special Ziegler-Natta procatalyst an organometallic cocatalyst as component (ii).

Accordingly it is preferred to select the cocatalyst from the group consisting of trialkylaluminum, like triethylaluminum (TEA), dialkyl aluminum chloride and alkyl aluminum sesquichloride.

Component (iii) of the catalyst system used is an external donor represented by formula (IIIa) or (IIIb). Formula (IIIa) is defined by

$$Si(OCH_3)_2(R'5)_2 \qquad \text{(IIIa)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR_xRy) \qquad \text{(IIIb)}$$

wherein $R_x$ and Ry can be the same or different a represent a hydrocarbon group having 1 to 12 carbon atoms.

$R_x$ and Ry are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R_x$ and Ry are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R_x$ and Ry are the same, yet more preferably both $R_x$ and Ry are an ethyl group.

More preferably the external donor of formula (IIIb) is diethylaminotriethoxysilane .

Most preferably the external donor is of formula (IIIa), like dicyclopentyl dimethoxy silane $(Si(OCH_3)_2(cyclopentyl)_2]$ or diisopropyl dimethoxy silane $[Si(OCH_3)_2(CH(CH_3)_2)_2]$.

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (ii)), which vinyl compound has the formula:

$$CH_2=CH-CHR_3R_4$$

wherein $R_3$ and $R_4$ together form a 5- or 6-membered saturated, unsaturated or aromatic ring or independently represent an alkyl group comprising 1 to 4 carbon atoms, and the modified catalyst is used for the preparation of the heterophasic propylene copolymer according to this invention. The polymerized vinyl compound can act as an $\alpha$-nucleating agent.

Concerning the modification of the catalyst, reference is made to the international applications WO 99/24478, WO 99/24479 and particularly WO 00/68315, incorporated herein by reference with respect to the reaction conditions concerning the modification of the catalyst as well as with respect to the polymerization reaction.

The present invention is further concerned with a moulded article comprising the processed heterophasic propylene polymer composition as described herein. The main end-uses for such moulded articles are in packaging applications, like plastic containers and household articles but also medical products, rigid packaging like detergent cartons, cup and plate boards for oven or microwave use or sterilizable food packaging. The articles comprising the heterophasic propylene polymer composition according to the present invention may also be used for the production of car exteriors and interiors, such as dashboards, door claddings, consoles, trims and the like. The articles may also include films for packaging or coating.

The articles comprising the heterophasic propylene polymer composition according to the invention may be produced by any common conversion process suitable for thermoplastic polymers like extrusion, injection moulding, blow moulding, injection stretch blow moulding, cast film extrusion or thermoforming.

The present invention is also concerned with the use of the heterophasic propylene polymer composition according to the present invention for extrusion, injection moulding, blow moulding, injection stretch blow moulding, cast film extrusion or thermoforming or the like.

## Examples

### 1. Methods

#### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg. The $MFR_2$ of polyethylene is determined at a temperature of 190 °C and a load of 2.16 kg. It is also designated in this application as "$MFR_2$".

#### b) Hexane extractable content

Hexane extractables were determined from a film produced by cast film extrusion (thickness 100 $\mu$m) according to the FDA method (RPOD09053 - Federal Registration, Title 21, Chapter 1, Part 177, Section 1520, Annex B) at a temperature of 50°C and an extraction time of 2 h.

#### c) Intrinsic viscosity

Intrinsic viscosity was measured according to DIN ISO 1628/1, October 1999 (in decalin at 135°C).

#### d) Xylene soluble content

The xylene cold soluble content (XCS) of the tested polymer compositions was determined according to ISO 6427 at 23 °C.

The amorphous content (AM) is measured by separating the above obtained xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein
AM% is the amorphous fraction;
m0 is the initial polymer amount (g);
m1 is the weight of the precipitate (g);
v0 is the initial volume (ml);
v1 is the volume of the analyzed sample (ml).

**e) Comonomer content**

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.
The calibration procedure based on results obtained from quantitative $^{13}C$-NMR spectroscopy was undertaken in the conventional manner well documented in the literature.
The amount of comonomer (N) was determined as weight percent (wt.%) via:

$$N = k_1 (A / R) + k_2$$

wherein A is the maximum absorbance defined of the comonomer band, R the maximum absorbance defined as peak height of the reference peak and with $k_1$ and $k_2$ the linear constants obtained by calibration. The band used for ethylene content quantification is selected depending if the ethylene content is random (730 $cm^{-1}$) or block-like (720 $cm^{-1}$). The absorbance at 4324 $cm^{-1}$ was used as a reference band.

**f) Charpy notched impact Strength (NIS)**

Charpy notched impact strength was determined according to ISO 179 / 1eA at 23 °C, and at -20 °C by using injection moulded test specimens as described in EN ISO 1873-2 (80 x 10 x 4 mm). The term "impact strength" in this application refers to the parameter as specified here.

**g) Haze and Transparency**

The haze and the transparency of the polymer samples were determined
according to ASTM D1003 on 1.0 mm and 0.5 mm thick injection moulded plaques of 60x60 mm.

**h) Tensile modulus**

The tensile modulus was determined according to ISO 527-2 (cross-head speed: 1 mm/min; 23 °C) using injection moulded test specimens as described in EN ISO 1873-2 (dog bone shape; 4 mm thickness).

**i) Melting Temperature**

Melting temperature ($T_m$) was measured with a Mettler TA820 differential scanning calorimetry (DSC) apparatus on 5 to 10 mg samples. DSC was performed according to ISO 3146 (part 3, method C2) in a heat/cool/heat cycle with a scan rate of 10 °C/min in the temperature range of +23 to +210 °C. Melting temperature was determined from the second heating step.

**k) Bulk density**

The bulk density of the highly porous polypropylene carrier was determined according to ISO 60: 1997.

**2. Compositions:**

The unmodified heterophasic polypropylene polymer was a development grade random-heterophasic copolymer prepared in a Borstar® pilot plant with an ethylene content after the first gas phase reactor of 1.1%. The final $MFR_2$ was 26 g/10 min. and a cross-bimodal rubber design was used.

The catalyst system was a vinylcyclohexyl (VCH)-modified catalyst of the type BCF20P, prepared according to Example 1 of WO99/24479 in combination with a triethylaluminum (TEA) cocatalyst and dicyclopentyl dimethoxysilane (donor D) as an external donor. The Al/Ti ratio (mol/mol) was 200 and the Al/donor ratio (mol/mol) was 5. Details of this polymer can be found in Table 1 below.

**Table 1**

| unit | MFR g/10min | XS total wt.-% | IV of XU dl/g | C2 of AM total wt.-% | IV of AM total dl/g |
|---|---|---|---|---|---|
| HECO 1 | 26 | 22 | 1.4 | 46 | 2.5 |

The obtained heterophasic polypropylene compositions were subjected to a post-reactor reactive processing by using a diene masterbatch, a peroxide masterbatch and a polyethylene additive as specified in Table 1 given below (inventive example E1). In the Comparative Example CE1 polyethylene was added to unmodified heterophasic polypropylene and in Comparative Example CE2 polyethylene was added to visbroken (peroxide-degraded) heterophasic polypropylene.

The oligomeric diene masterbatch composition used was as ACCUREL® PA104 (supplier: Membrana GmbH, DE) based on the highly porous polypropylene homopolymer carrier ACCUREL® XP100-84 (supplier: Membrana GmbH, DE) having a void content of 83 % and a bulk density of 95 kg/m$^3$. The peroxide masterbatch composition used was TRIGONOX® BPIC 37.5PP-PD (supplier: AKZO NOBEL Polymer Chemicals BV, NL) based on the highly porous polypropylene homopolymer carrier ACCUREL® MP100 (supplier: Membrana GmbH, DE) having a void content of 78 % and a bulk density of 130 kg/m$^3$.

The butadiene masterbatch composition, the peroxide masterbatch composition and the ethylene polymer component specified below were injected into the polymer melt in the extruder in a twin screw extruder ZSK18 (Coperion GmbH, Germany) having a barrel diameter of 18 mm and an L/D-ratio of 40 equipped with a high intensity mixing screw having three kneading zones and a two-step degassing setup. A temperature setting: 170/180/190/220/220/210/210 °C was used with a melt temperature of 215 °C. The screw speed was set at 300 rpm. Following the melt-mixing step, the resulting polymer melt was pelletized in an underwater pelletizer or after solidification of one or more strands in a water bath in a strand pelletizer at a water temperature of 40°C. The throughput was 7 kg/h.

Polyethylene was blended into the unmodified heterophasic polypropylene before reactive processing. Surpass® IFS-932-R is a medium density polyethylene prepared by use of a single-site catalyst with 1.9 mol-% 1-octene as comonomer. Although its density is higher than that of low density polyethylene CA9150, the achievable haze in blends with the single-site catalysed polyethylene is excellent. This is thought to be based on a better dispersion of this high flow polyethylene in the matrix which leads to the formation of smaller particles wich are favourable for good transparency.

In the following experiments 1:1 blends of these two polyethylenes were used. A comparison of some basic parameters of the used polyethylenes is given in Table 2 below. A 1:1 (wt/wt) blend of these two polyethylenes has an $MFR_2$ of 47 g/10min and a density of 0.924 g/cm$^3$.

**Table 2.**

| | Unit | Surpass IFS-932-R | CA9150 |
|---|---|---|---|
| MFR (2.16kg /190 °C) | g/10min | 150 | 15 |
| Density | g/cm$^3$ | 0.932 | 0.915 |
| Tensile modulus | MPa | 360 | 115 |
| NIS (23°C) | kJ/m$^2$ | 6.6 | - |
| NIS (-20 °C) | kJ/m$^2$ | 3.2 | - |
| Mw | kg/mol | 31 | 518 |

(continued)

| | Unit | Surpass IFS-932-R | CA9150 |
|---|---|---|---|
| MWD | - | 3.1 | 30.7 |

**Surpass® IFS-932-R** is a medium density ethylene-octene copolymer (sMDPE), commercially available from Nova Chemicals, Calgary, AB, Canada.
**CA9150** is a low-density ethylene homopolymer for extrusion coating commercially available from Borealis AG, Vienna, Austria.

The produced blends contain 15 wt.-% of polyethylene and 0.2 wt.-% of an α-nucleating agent for the polypropylene (Millad® 3998, Milliken Chemical, Spartanburg, S.C) as well as 0.04 wt.% of calcium stearate as acid scavenger and 0.16 wt.% of a 1:1-mixture of pentaerythrityl-tetrakis(3-(3',5'-di-tert. butyl-4-hydroxyphenyl)-propionate and tris (2,4-di-t-butylphenyl) phosphite (Irganox B225, BASF AG, DE) as stabilizers. The exact composition of the inventive example E1 and the comparative examples CE1 and CE2 are summarized in Table 3 below (all values in wt.%). In the inventive Example E1, a peroxide masterbatch and a butadiene masterbatch were used which had the composition as described above. The obtained characteristics of the reactively-modified heterophasic polypropylene are shown in Table 4 below.

**Table 3**

| Component | E1 | CE1 | CE2 |
|---|---|---|---|
| HECO1 | 83.4 | 83.8 | |
| Visbroken HECO1 ($MFR_2$ = 48 g/10 min) | | | 83.5 |
| CA9150 | 7.5 | 7.5 | 7.5 |
| ® SURPASS® IFS932-R | 7.5 | 7.5 | 7.5 |
| Peroxide-MB BPIC PP37.5 | 0.3 | | |
| Polybutadiene-MB | 0.1 | | |
| Millad® 3998 | 0.2 | 0.2 | 0.2 |

**Table 4**

| Property | unit | E1 | CE1 | CE2 |
|---|---|---|---|---|
| MFR | g/10min | 42 | 22 | 39 |
| N-HEXANE SOLUBLES (FDA) | wt.% | 3.7 | 3.8 | 4.0 |
| TENSILE MODULUS | MPa | 1015 | 1097 | 1007 |
| IMPACT STRENGTH (23 °C) | $kJ/m^2$ | 7.9 | 8.5 | 6.7 |
| IMPACT STRENGTH (-20°C) | $kJ/m^2$ | 3.3 | 2.2 | 2.2 |
| TRANSPARENCY (0.5mm) | % | 89 | 89 | 88 |
| TRANSPARENCY (1mm) | % | 81 | 82 | 80 |
| HAZE (0.5mm) | % | 32 | 32 | 22 |
| HAZE (1mm) | % | 63 | 65 | 50 |
| CLARITY (0.5mm) | % | 95 | 96 | 95 |
| CLARITY (1mm) | % | 90 | 94 | 93 |

The use of reactive modification instead of mixing a polyethylene additive to the heterophasic polypropylene and blending the mixture, leads to higher flowability and comparable room temperature impact strength. A remarkable difference can be found in the low-temperature impact performance which is a key property for commercial applications. The haze of the reactive modified samples is maintained at the same level as that of CE1 (polyethylene added to unmodified heterophasic polpropylene). CE2 (polyethylene added to visbroken (peroxide-degraded heterophasic polypropylene) showed a better haze performance. This may be based on a finer rubber dispersion due to the origination of smaller particles in the heterophasic polypropylene during the visbreaking step of the base material. However, the n-hexane soluble content is negatively affected by the visbreaking step, whereas it is maintained unaffected by the reactive modification step. The stiffness becomes slightly reduced by reactive modification as well as by the visbreaking step. However, it is comparable to the stiffness of commercial grades of heterophasic polypropylene.

## Claims

1. A heterophasic propylene polymer composition, comprising:

(A) a heterophasic propylene base polymer, comprising:

- a matrix comprising a propylene homo- and/or copolymer,
- an elastomeric ethylene/ alpha-olefin phase dispersed in the matrix, and

(B) an ethylene polymer component having an MFR (2.16 kg/ 190 °C) of 15 to 300 g/10 min. and a density of 0.915 $g/cm^3$,
the heterophasic propylene polymer composition comprising monomer units derived from an oligomeric diene compound, and having a hexane extractable fraction in an amount of not more than 6 %, measured from extruded cast films of 100 μm thickness at 50 °C and 2 h extraction time and an MFR (2.16 kg, 230 °C, ISO 1133) of 8 to 80 g/10min.

2. Heterophasic propylene polymer composition obtainable by a multistage polymerisation process in the presence of a stereospecific polymerisation catalyst,comprising the steps of:

(i) producing an unmodified intermediate heterophasic propylene polymer composition having an $MFR_2$ (230 °C, 2.16 kg) of from 6 to 80 g/10 min comprising:

a heterophasic propylene base polymer, comprising:

- a matrix comprising a propylene homo- and/or copolymer,
- an elastomeric ethylene/ alpha-olefin phase dispersed in the matrix;

(ii) pre-mixing a peroxide masterbatch composition, an oligomeric diene masterbatch composition and an ethylene polymer component having an MFR (2.16 kg/ 190 °C) of 15 to 300 g/10 min. and a density of 0.915 $g/cm^3$ or more to said unmodified intermediate heterophasic propylene polymer composition of step (i) to obtain a pre-mixed material; and
(iii) melt mixing the pre-mixed material of step (ii) in a melt mixing device at a barrel temperature in the range of 180 to 300 °C.

3. Heterophasic propylene polymer composition according to claim 2, whereby the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die zone, whereby the barrel temperatures T1, T2, and T3 satisfy the following relation:

$T1 < T3 < T2$.

4. Heterophasic propylene polymer composition according to any one of the preceding claims, having a Charpy notched impact strength at -20 °C of at least 2.5 $kJ/m^2$, measured according to ISO 179/1eA.

5. Heterophasic propylene polymer composition according to any one of the preceding claims, having a transparency of at least 80 %, measured according ASTM D1003 on 0.5 mm samples.

6. Heterophasic propylene polymer composition according to any one of the preceding claims, having a haze value of not more than 35%, measured according ASTM D1003 on 0.5 mm samples.

7. A process for the production of a heterophasic propylene polymer composition according to any of claims 1 to 6, comprising the steps of:

(i) providing an unmodified intermediate heterophasic propylene polymer composition having an $MFR_2$ (230 °C, 2.16 kg) of from 6 to 80 g/10 min which comprises a heterophasic propylene base polymer comprising a matrix comprising a propylene homo- and/or copolymer, and an elastomeric ethylene/alpha-olefin phase dispersed in the matrix,
(ii) pre-mixing a peroxide masterbatch composition, an oligomeric diene masterbatch composition and an ethylene polymer component having an MFR (2.16 kg/ 190 °C) of 15 to 300 g/10 min. or more and a density of 0.915 $g/cm^3$ or more with the unmodified intermediate heterophasic propylene polymer composition of step (i) to form a pre-mixed material and
(iii) melt mixing the pre-mixed material of step (ii) in a melt mixing device at a barrel temperature in the range of 180 to 300 °C.

**8.** Process according to claim 7, wherein peroxide masterbatch composition is added in step (ii) in an amount of 0.5 to 4.0 wt.%, based on the total heterophasic propylene polymer composition.

**9.** Process according to claim 7 or 8, wherein the oligomeric diene masterbatch composition is added in step (ii) in an amount of 0.5 to 20 wt.%, based on the total heterophasic propylene polymer composition.

**10.** Article comprising the heterophasic propylene polymer composition according to any of claims 1 to 6.

**11.** Article according to claim 10 which is an extruded, injection moulded, blow moulded, injection stretch blow moulded, cast film extruded or thermoformed article.

**12.** Use of a heterophasic propylene polymer composition as defined in any of claims 1 to 6 for extrusion, injection moulding, blow moulding, injection stretch blow moulding, cast film extrusion or thermoforming.

**Amended claims in accordance with Rule 137(2) EPC.**

**1.** A heterophasic propylene polymer composition, comprising:

(A) a heterophasic propylene base polymer, comprising:

- a matrix comprising a propylene homo- and/or copolymer,
- an elastomeric ethylene/ alpha-olefin phase dispersed in the matrix, and

(B) an ethylene polymer component having an MFR (2.16 kg/ 190 °C) of 15 to 300 g/10 min. and a density of 0.915 $g/cm^3$,
the heterophasic propylene polymer composition comprising monomer units derived from an oligomeric diene compound, and
having a hexane extractable fraction in an amount of not more than 6 wt.%, measured from extruded cast films of 100 $\mu$m thickness at 50 °C and 2 h extraction time and an MFR (2.16 kg, 230 °C, ISO 1133) of 8 to 80 g/10min.

**2.** Heterophasic propylene polymer composition obtainable by a multistage polymerisation process in the presence of a stereospecific polymerisation catalyst,comprising the steps of:

(i) producing an unmodified intermediate heterophasic propylene polymer composition having an $MFR_2$ (230 °C, 2.16 kg) of from 6 to 80 g/10 min comprising:

a heterophasic propylene base polymer, comprising:

- a matrix comprising a propylene homo- and/or copolymer,
- an elastomeric ethylene/ alpha-olefin phase dispersed in the matrix;

(ii) pre-mixing a peroxide masterbatch composition, an oligomeric diene masterbatch composition and an ethylene polymer component having an MFR (2.16 kg/ 190 °C) of 15 to 300 g/10 min. and a density of 0.915 $g/cm^3$ or more to said unmodified intermediate heterophasic propylene polymer composition of step (i) to obtain a pre-mixed material; and
(iii) melt mixing the pre-mixed material of step (ii) in a melt mixing device at a barrel temperature in the range of 180 to 300 °C.

**3.** Heterophasic propylene polymer composition according to claim 2, whereby the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die

zone, whereby the barrel temperatures T1, T2, and T3 satisfy the following relation:

$$T1 < T3 < T2.$$

**4.** Heterophasic propylene polymer composition according to any one of the preceding claims, having a Charpy notched impact strength at -20 °C of at least 2.5 kJ/$m^2$, measured according to ISO 179/1eA.

**5.** Heterophasic propylene polymer composition according to any one of the preceding claims, having a transparency of at least 80 %, measured according ASTM D1003 on 0.5 mm samples.

**6.** Heterophasic propylene polymer composition according to any one of the preceding claims, having a haze value of not more than 35%, measured according ASTM D1003 on 0.5 mm samples.

**7.** A process for the production of a heterophasic propylene polymer composition according to any of claims 1 to 6, comprising the steps of:

(i) providing an unmodified intermediate heterophasic propylene polymer composition having an $MFR_2$ (230 °C, 2.16 kg) of from 6 to 80 g/10 min which comprises a heterophasic propylene base polymer comprising a matrix comprising a propylene homo- and/or copolymer, and an elastomeric ethylene/alpha-olefin phase dispersed in the matrix,
(ii) pre-mixing a peroxide masterbatch composition, an oligomeric diene masterbatch composition and an ethylene polymer component having an MFR (2.16 kg/ 190 °C) of 15 to 300 g/10 min. or more and a density of 0.915 g/$cm^3$ or more with the unmodified intermediate heterophasic propylene polymer composition of step (i) to form a pre-mixed material; and
(iii) melt mixing the pre-mixed material of step (ii) in a melt mixing device at a barrel temperature in the range of 180 to 300 °C.

**8.** Process according to claim 7, wherein peroxide masterbatch composition is added in step (ii) in an amount of 0.5 to 4.0 wt.%, based on the total heterophasic propylene polymer composition.

**9.** Process according to claim 7 or 8, wherein the oligomeric diene masterbatch composition is added in step (ii) in an amount of 0.5 to 20 wt.%, based on the total heterophasic propylene polymer composition.

**10.** Article comprising the heterophasic propylene polymer composition according to any of claims 1 to 6.

**11.** Article according to claim 10 which is an extruded, injection moulded, blow moulded, injection stretch blow moulded, cast film extruded or thermoformed article.

**12.** Use of a heterophasic propylene polymer composition as defined in any of claims 1 to 6 for extrusion, injection moulding, blow moulding, injection stretch blow moulding, cast film extrusion or thermoforming.

Europäisches Patentamt
European Patent Office
Office européen des brevets

# EUROPEAN SEARCH REPORT

Application Number
EP 11 00 1636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2009/129873 A1 (BOREALIS AG [AT]; GREIN CHRISTELLE [AT]; BERNREITER KLAUS [AT]; VESTBE) 29 October 2009 (2009-10-29)<br>* the whole document *<br>----- | 1-12 | INV.<br>C08L23/10 |
| A | EP 1 211 289 A1 (BOREALIS GMBH [AT])<br>5 June 2002 (2002-06-05)<br>* the whole document *<br>----- | 1-12 | |
| A | EP 2 182 030 A1 (BOREALIS AG [AT])<br>5 May 2010 (2010-05-05)<br>* the whole document *<br>----- | 1-12 | |
| A | EP 2 226 337 A1 (BOREALIS AG [AT])<br>8 September 2010 (2010-09-08)<br>* the whole document *<br>----- | 1-12 | |

TECHNICAL FIELDS SEARCHED (IPC)

C08L

The present search report has been drawn up for all claims

1

| Place of search | Date of completion of the search | Examiner |
|---|---|---|
| The Hague | 7 April 2011 | Droghetti, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 00 1636

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2011

| Patent document cited in search report | Publication date | Patent family member(s) | Publication date |
|---|---|---|---|
| WO 2009129873 A1 | 29-10-2009 | EP 2283072 A1 | 16-02-2011 |
| | | US 2011034634 A1 | 10-02-2011 |
| EP 1211289 A1 | 05-06-2002 | AT 378377 T | 15-11-2007 |
| | | AT 478118 T | 15-09-2010 |
| | | AU 2368502 A | 11-06-2002 |
| | | AU 2002223685 B2 | 08-06-2006 |
| | | CN 1487973 A | 07-04-2004 |
| | | DE 60131460 T2 | 04-09-2008 |
| | | DK 1358266 T3 | 10-03-2008 |
| | | WO 0244272 A1 | 06-06-2002 |
| | | EP 1358266 A1 | 05-11-2003 |
| | | EP 1702956 A2 | 20-09-2006 |
| | | ES 2296832 T3 | 01-05-2008 |
| | | ES 2348383 T3 | 03-12-2010 |
| | | JP 2004520455 T | 08-07-2004 |
| | | JP 2008138222 A | 19-06-2008 |
| | | US 2004210002 A1 | 21-10-2004 |
| EP 2182030 A1 | 05-05-2010 | EP 2243803 A1 | 27-10-2010 |
| | | WO 2010049448 A1 | 06-05-2010 |
| EP 2226337 A1 | 08-09-2010 | WO 2010100098 A1 | 10-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009129873 A1
- EP 2072546 A1
- EP 2154195 A1
- EP 1607440 A1
- EP 0491566 A1
- EP 0591224 A1
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A